# DEMANDE DE BREVET EUROPEEN

(11) **EP 3 683 779 A1**
(43) Date de publication de la demande: **22.07.2020**
(21) Numéro de dépôt: 20152378.4
(22) Date de dépôt: 17.01.2020
(51) Int. Cl.: G08G 1/01, G05D 1/02, G06K 9/00, G08G 1/015, G08G 1/04, G08G 1/16

(54) **PLATEFORME ET PROCÉDÉ DE SUPERVISION D'UNE INFRASTRUCTURE POUR VÉHICULES DE TRANSPORT, VÉHICULE, SYSTÈME DE TRANSPORT ET PROGRAMME D'ORDINATEUR ASSOCIÉS**

(30) Priorité: 17.01.2019 FR 1900421
(71) Demandeur: Transdev Group, 92130 Issy les Moulineaux (FR)
(72) Inventeur: KARAOGUZ, Cem, 91120 PALAISEAU (FR); BEAUVILLAIN, Alexis, 91300 MASSY (FR)
(74) Mandataire: Lavoix

(57) **Abrégé**

L'invention concerne une plateforme de supervision (14) d'une infrastructure pour véhicules (12, 12_{A}), un véhicule cible (12_{A}) comprenant un module de détection d'obstacle (16) de champ de vision prédéterminé et un module de géolocalisation (20) embarqués, ledit véhicule cible (12_{A}) étant propre à suivre un trajet prédéfini, la plateforme (14) comprenant :
- un module d'acquisition (28), à un instant courant, d'au moins une information représentative de la présence ou absence, dans une zone de sécurité prédéterminée, d'un élément externe (27, G_{P}) au véhicule cible (12_{A}), et
- un module d'analyse (30) pour déterminer si, à l'instant courant, l'élément externe (27, G_{P}) est dans ou en dehors du champ de vision du module de détection d'obstacle (16) du véhicule cible (12_{A}), et pour générer et transmettre une consigne de conduite à au moins un véhicule sur l'infrastructure lorsque l'élément externe (27, G_{P}) est en dehors du champ de vision.

## Description

La présente invention concerne une plateforme de supervision d'une infrastructure pour véhicules de transport, notamment autonomes, au moins un véhicule cible comprenant un module de détection d'obstacle de portée prédéterminée et un module de géolocalisation embarqués, ledit véhicule cible étant propre à suivre un trajet prédéfini sur l'infrastructure.

L'invention concerne également un véhicule, notamment autonome, propre à se déplacer sur une infrastructure pour véhicules de transport supervisée par une telle plateforme de supervision, au moins un véhicule cible comprenant un module de détection d'obstacle de champ de vision prédéterminé et un module de géolocalisation embarqués, ledit véhicule cible étant propre à suivre un trajet prédéfini sur l'infrastructure.

L'invention concerne également un système de transport comprenant une flotte de véhicules, notamment autonomes, propres à se déplacer sur une infrastructure pour véhicules de transport, la flotte de véhicules comprenant au moins un véhicule cible comprenant un module de détection d'obstacle de champ de vision prédéterminé et un module de géolocalisation embarqués, ledit véhicule cible étant propre à suivre un trajet prédéfini sur l'infrastructure.

L'invention concerne également un procédé de supervision d'une infrastructure pour véhicules de transport, notamment autonomes, au moins un véhicule cible comprenant un module de détection d'obstacle de champ de vision prédéterminé et un module de géolocalisation embarqués, ledit véhicule cible étant propre à suivre un trajet prédéfini sur l'infrastructure, le procédé étant mis en oeuvre par une telle plateforme de supervision de l'infrastructure.

L'invention concerne également un programme d'ordinateur comportant des instructions logicielles qui, lorsqu'elles sont exécutées par un ordinateur, mettent en œuvre un tel procédé de supervision.

L'invention concerne le domaine de la supervision d'une flotte de véhicules de transport sur une infrastructure, notamment routière ou ferrée, et notamment le domaine de la conduite automatique de véhicules de transport autonomes.

En effet, dans le domaine de la conduite sécurisée de véhicules, et notamment dans la conduite autonome (i.e. pilotage autonome), un des problèmes principaux est l'identification anticipée d'obstacles sur le trajet d'un véhicule en mouvement, permettant de prendre des mesures correctrices pour que le véhicule ne percute pas ces obstacles, ainsi que la transmission d'informations entre chaque véhicule de la flotte et un équipement électronique correspondant à une plateforme de supervision à distance de la flotte de véhicule(s) automobile(s).

Les obstacles considérés sont de tout type, par exemple des obstacles fixes, comme des rambardes de sécurité, des véhicules stationnés, ou des obstacles en mouvement, par exemple d'autres véhicules ou des piétons. On comprend qu'il est critique d'éviter toute collision entre un véhicule en mouvement et de tels obstacles, et également d'assurer une bonne transmission d'informations entre chaque véhicule et l'équipement de supervision.

On connait des véhicules équipés chacun d'au moins un module de détection d'obstacle configuré pour détecter tout obstacle entrant dans son champ de vision. Cependant, une telle détection d'obstacle mise en œuvre par le seul véhicule est limitée par le champ de vision du module de détection d'obstacle qu'il comprend.

Par ailleurs, on connaît des systèmes de perception collective d'assistance à la conduite automobile comprenant des dispositifs de communication aptes à identifier des obstacles dans une zone de circulation via des capteurs, installés en voirie et/ou embarqués à bord d'une pluralité de véhicules distincts, et aptes à en informer la plateforme de supervision à distance. La plateforme de supervision à distance est apte à déterminer et à transmettre une consigne à un véhicule circulant dans ladite zone de circulation routière.

Toutefois, la transmission de ces informations de la plateforme au véhicule n'est pas toujours satisfaisante, la quantité de données de perception collectives collectées par la plateforme de supervision à relayer via la liaison de données étant parfois trop importante pour la bande passante disponible.

Le but de l'invention est de remédier aux inconvénients de l'état de la technique en proposant une plateforme de supervision à distance plus efficace, notamment en cas de débit limité de données de la liaison de communication établie avec chaque véhicule supervisé.

A cet effet, l'invention a pour objet une plateforme de supervision d'une infrastructure pour véhicules de transport, notamment autonomes, au moins un véhicule cible comprenant au moins un module de détection d'obstacle de champ de vision prédéterminé et un module de géolocalisation embarqués, ledit véhicule cible étant propre à suivre un trajet prédéfini sur l'infrastructure, la plateforme comprenant :
- un module d'acquisition configuré pour acquérir, à un instant courant, au moins une information représentative de la présence ou de l'absence, dans une zone de sécurité prédéterminée comprenant le trajet prédéfini, d'un élément externe au véhicule cible, et
- un module d'analyse et de régulation configuré pour déterminer si, à l'instant courant, l'élément externe est dans le champ de vision ou en dehors du champ de vision du module de détection d'obstacle du véhicule cible, et configuré pour générer et transmettre une consigne de conduite à au moins un véhicule sur l'infrastructure lorsque l'élément externe est en dehors du champ de vision du module de détection d'obstacle du véhicule cible.

Ainsi, avec la plateforme de supervision selon l'invention une consigne de conduite est émise à destination d'au moins un véhicule sur l'infrastructure qu'elle supervise uniquement lorsqu'un élément externe, détecté dans une zone de sécurité comprenant le trajet prédéfini d'un véhicule cible, est en dehors du champ de vision du module de détection d'obstacle embarqué à bord de ce véhicule.

Autrement dit, la plateforme de supervision permet d'anticiper toute obstruction, notamment temporaire, du champ de vision du module de détection d'obstacle embarqué à bord du véhicule cible tout en filtrant la quantité de données de perception collective collectées par exemple via des capteurs, installés en voirie et/ou embarqués à bord d'une pluralité de véhicules distincts.

La plateforme de supervision selon l'invention est donc améliorée par rapport à la plateforme de supervision de l'état de la technique au moyen notamment de son module d'analyse et de régulation qui est propre à mettre en œuvre systématiquement un traitement des données reçues pour limiter la génération de consigne(s) de conduite à transmettre en l'asservissant à la réalisation d'une double condition à savoir que l'élément externe détecté, notamment par exemple par une perception collective, est à la fois dans une zone de sécurité prédéterminée comprenant le trajet prédéfini d'un véhicule cible et en dehors du champ de vision du module de détection d'obstacle embarqué à bord de ce même véhicule cible.

Suivant d'autres aspects avantageux de l'invention, la plateforme de supervision comprend une ou plusieurs des caractéristiques suivantes, prises isolément ou suivant toutes les combinaisons techniquement possibles :
- lorsque l'élément externe au véhicule cible est mobile, le module de d'acquisition est également configuré pour recevoir une information de vitesse et/ou d'accélération associée à l'information représentative de la présence de l'élément externe ;
- le module d'analyse et de régulation comprend un outil de prédiction propre à fournir une prédiction de la trajectoire de l'élément externe et/ou au moins une prédiction d'une position spatiotemporelle de contact entre l'élément externe et le véhicule cible sur le trajet prédéfini ;
- la position spatiotemporelle correspond à une zone elliptique et dans lequel l'outil de prédiction comprend un instrument de calcul des paramètres de la zone elliptique, la surface de la zone elliptique étant proportionnelle à un degré d'incertitude associée à la prédiction fournie par l'outil de prédiction ;
- le module d'analyse et de régulation comprend un outil de vérification configuré pour vérifier à au moins un instant postérieur à l'instant courant la validité de la ou des prédiction(s), et configuré pour adapter à l'instant postérieur la consigne de conduite en fonction de ladite validité ;
- la plateforme est propre à classer l'élément externe selon plusieurs catégories comprenant au moins :
   - un autre véhicule, distinct du véhicule cible,
   - une congestion de trafic,
   - un piéton ou un groupe de piétons,
   - un cycliste ou un groupe de cyclistes,
   - une zone de chantier ou de restriction de la circulation,
   - un phénomène météorologique
   - un obstacle naturel
et à adapter le type de consigne en fonction de la catégorie d'élément externe.

L'invention a également pour objet un véhicule, notamment autonome, propre à se déplacer sur une infrastructure pour véhicules de transport supervisée par une plateforme de supervision selon l'une quelconque des revendications précédentes, au moins un véhicule cible comprenant au moins un module de détection d'obstacle de champ de vision prédéterminé et un module de géolocalisation embarqués, ledit véhicule cible étant propre à suivre un trajet prédéfini sur l'infrastructure,
ledit véhicule comprenant un module de réception et de traitement configuré pour recevoir et traiter une consigne de conduite émise par la plateforme de supervision en présence d'un élément externe à la fois dans une zone de sécurité prédéterminée comprenant le trajet prédéfini et en dehors du champ de vision du module de détection d'obstacle du véhicule cible.

L'invention a également pour objet un système de transport comprenant une flotte de véhicules, notamment autonomes, propres à se déplacer sur une infrastructure pour véhicules de transport, la flotte de véhicules comprenant au moins un véhicule cible comprenant au moins un module de détection d'obstacle de champ de vision prédéterminé et un module de géolocalisation embarqués, ledit véhicule cible étant propre à suivre un trajet prédéfini sur l'infrastructure,
comprenant en outre une plateforme de supervision telle que décrite précédemment et en ce qu'au moins un véhicule de la flotte de véhicules comprend un module de réception et de traitement configuré pour recevoir et traiter une consigne de conduite émise par la plateforme de supervision en présence d'un élément externe à la fois dans une zone de sécurité prédéterminée comprenant le trajet prédéfini et en dehors du champ de vision du module de détection d'obstacle du véhicule cible.

L'invention a également pour objet un procédé de supervision d'une infrastructure pour véhicules de transport, notamment autonomes, au moins un véhicule cible comprenant au moins un module de détection d'obstacle de champ de vision prédéterminé et un module de géolocalisation embarqués, ledit véhicule cible étant propre à suivre un trajet prédéfini sur l'infrastructure, le procédé étant mis en œuvre par une plateforme de supervision de l'infrastructure pour véhicules de transport, notamment autonomes, au moins un véhicule cible comprenant au moins un module de détection d'obstacle de champ de vision prédéterminé et un module de géolocalisation embarqués, ledit véhicule cible étant propre à suivre un trajet prédéfini sur l'infrastructure, le procédé étant mis en œuvre par une plateforme de supervision de l'infrastructure, le procédé comprenant les étapes consistant à :
- acquérir, à un instant courant, au moins une information représentative de la présence ou de l'absence, dans une zone de sécurité prédéterminée comprenant le trajet prédéfini, d'un élément externe au véhicule cible,
- déterminer si, à l'instant courant, l'élément externe est dans le champ de vision ou en dehors du champ de vision du module de détection d'obstacle du véhicule cible, puis générer et transmettre une consigne de conduite à au moins un véhicule sur l'infrastructure lorsque l'élément externe est en dehors du champ de vision du module de détection d'obstacle du véhicule cible.

L'invention a également pour objet un programme d'ordinateur comportant des instructions logicielles qui, lorsqu'elles sont exécutées par un ordinateur, mettent en œuvre un procédé de supervision tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
[Fig 1] la figure 1 est une représentation schématique d'un système de transport selon l'invention dans une première situation de supervision basique ;
[Fig 2] [Fig 3] et [Fig 4] les figures 2, 3 et 4 sont des exemples de situations supplémentaires de supervision ; et
[Fig 5] la figure 5 est un organigramme d'un procédé de supervision selon l'invention.

Dans la suite de la description, l'expression « sensiblement égal(e) à » désigne une relation d'égalité à plus ou moins 10%, de préférence à plus ou moins 5%.

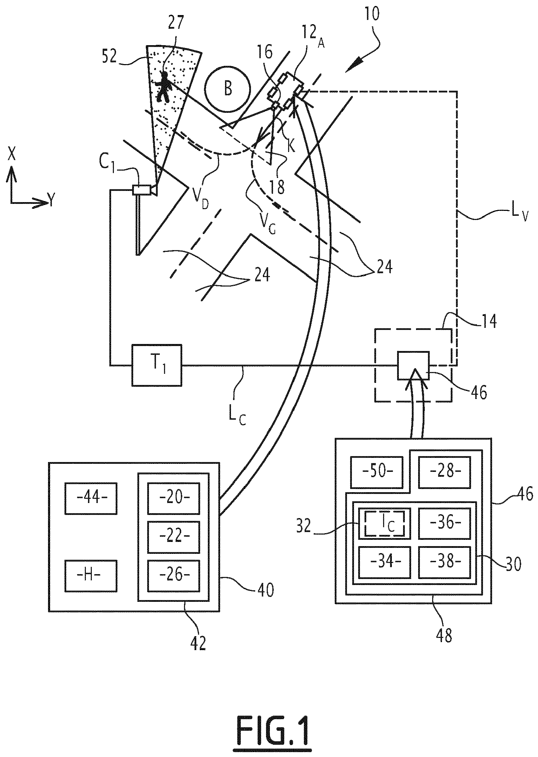

Sur la figure 1, un système de transport 10 comprend une flotte de véhicules 12, une plateforme de supervision 14 et une pluralité de capteurs, installés en voirie tel que le capteur C₁ et/ou embarqués à bord d'une pluralité de véhicules distincts (non représentés). Parmi la flotte de véhicules 12, au moins un véhicule 12 est un véhicule autonome et est alors noté 12_{A}. La flotte comporte de préférence une pluralité de véhicules 12, chaque véhicule étant de préférence un véhicule autonome 12_{A}.

Dans l'exemple de la figure 1, le véhicule autonome 12_{A} est une voiture autonome, un bus autonome, un tramway autonome, un train autonome, ou encore tout autre moyen de transport public autonome, etc.

Un tel véhicule autonome 12_{A} comprend de manière connue, des roues avant, des roues arrière, un moteur (non représenté) relié mécaniquement via une chaîne de transmission aux roues avant et/ou arrière pour l'entraînement desdites roues en rotation autour de leur axe, un système de direction (non représenté), adapté pour agir sur les roues avant et/ou arrière du véhicule autonome 12_{A} de manière à modifier l'orientation de sa trajectoire, et un système de freinage (non représenté), adapté pour exercer une force de freinage sur les roues du véhicule autonome 12_{A}.

L'homme du métier comprendra alors que le véhicule 12_{A} est représenté en vue de dessus sur la vue schématique de la figure 1, les rectangles noirs symbolisant les roues de ce véhicule autonome 12_{A}.

Selon l'invention, un tel véhicule autonome 12_{A} est muni d'au moins un module de détection d'obstacle 16 dont le champ de vision 18 est prédéterminé et connu de la plateforme de supervision 14.

Un tel module de détection d'obstacle 16 comprend par exemple un ou plusieurs capteurs embarqués au sein du véhicule correspondant à un capteur d'image(s), c'est-à-dire un capteur photo ou une caméra ou encore choisi parmi le groupe de capteurs comprenant au moins : un lidar (de l'anglais *light detection and ranging*), un leddar (de l'anglais *light emitting diode detection and ranging*), un radar (de l'anglais *radio detection and ranging*) et un capteur à ultrasons.

De plus, tel qu'illustré sur la figure 1, le véhicule autonome 12_{A} comprend un module de géolocalisation 20, une horloge H, et un module de conduite autonome 22.

Par module de géolocalisation 20, on entend, par la suite, un instrument propre à positionner le véhicule autonome 12_{A} sur un plan ou une carte à l'aide de ses coordonnées géographiques. Un tel module de géolocalisation 20 est propre à être localisé, par exemple grâce à un système de positionnement par satellites, à recevoir son positionnement géographique en temps réel via, par exemple, un récepteur GPS et à le diffuser en temps réel.

D'autres techniques de géolocalisation sont utilisables selon l'invention, telles que la géolocalisation par géocodeur, par GSM, par WiFi, par utilisation d'une centrale inertielle, d'un radar ou encore d'un lidar.

De telles techniques de géolocalisation sont selon un aspect particulier de l'invention optimisées par une technique de repérage sur carte (de l'anglais *« Map Matching* ») ou encore une technique de cartographie et de localisation simultanées (SLAM de l'anglais « *Simultaneous localization and mapping* »).

Selon un aspect particulier de l'invention, le module de géolocalisation 20 et l'horloge H sont conformes à un niveau d'effort de conception de sûreté de fonctionnement ASIL D (ASIL de l'anglais « *Automotive Safety Integrity Level* »), un tel niveau ASIL D représentant le degré maximal de rigueur requise pour assurer les exigences de sécurité associé à un niveau maximal de danger. L'ASIL étant par définition obtenu par multiplication d'un triplet de valeurs respectivement représentatives de trois critères de sûreté à savoir la sévérité, l'exposition et la contrôlabilité.

Autrement dit, lors de la conception du véhicule autonome 12_{A} selon la présente invention, le niveau maximal de précision en termes d'indication(s) temporelle(s) délivrée(s) par l'horloge H et en termes de précision de géolocalisation géographique du véhicule autonome 12_{A} délivrée par le module de géolocalisation 20 est exigé.

Par la suite, on entend par module de conduite autonome 22, un automate adapté pour piloter le véhicule autonome de manière autonome en recevant des informations sur l'environnement du véhicule autonome 12_{A} par l'intermédiaire de capteurs, localisés à l'extérieur ou à l'intérieur du véhicule autonome, et en agissant sur le moteur (non représenté), le système de direction (non représenté) et le système de freinage (non représenté) de manière à modifier la vitesse et la trajectoire du véhicule autonome 12_{A} en réaction aux informations reçues et de manière à se conformer à une mission programmée dans l'automate.

En particulier, une telle mission correspond au suivi d'un trajet prédéfini, tel que par exemple le trajet suivi par une ligne de bus ou de tramway ou de tout autre moyen de transport public autonome sur une ou plusieurs voies de circulation 24, visibles sur la figure 1.

Par ailleurs, le véhicule autonome 12_{A} comprend un module de réception et de traitement 26 configuré pour recevoir, via la liaison dédiée Lv (optionnellement sécurisée) et traiter une consigne de conduite émise par la plateforme de supervision 14 en présence d'un élément externe 27 dans une zone de sécurité prédéterminée comprenant le trajet prédéfini et hors du champ de vision de son propre module de détection d'obstacle 16, selon cet exemple, le véhicule autonome 12_{A} étant la cible de la supervision mise en œuvre par la plateforme de supervision 14. Une telle consigne correspond notamment à un ordre, voire une valeur de décélération ou à un changement de trajectoire, et est par la suite transférée par le module de réception 26 au module de conduite autonome 22 pour traitement et/ou application.

En complément facultatif, le module de réception 26 est également configuré pour recevoir une information représentative de la position de l'élément externe 27 et vérifier que l'élément externe 27 est en dehors du champ de vision du module de détection d'obstacle 16 du véhicule autonome 12_{A} ce qui permet d'éviter l'application d'une consigne de conduite supplémentaire si, après vérification, l'élément externe 27 est visible du module de détection d'obstacle 16 et qu'intrinsèquement le module de conduite autonome 22 a déjà pris en compte cet élément externe 27 pour adapter le comportement du véhicule autonome 12_{A}.

La plateforme de supervision 14 est un équipement électronique apte à superviser à distance, voire à contrôler à distance, la flotte de véhicule(s) automobile(s) 12, la plateforme de supervision étant également appelé PCC (de l'acronyme Poste de Commande Central).

Selon l'invention, la plateforme de supervision 14 comprend un module d'acquisition 28 configuré pour acquérir, à un instant courant, au moins une information représentative de la présence ou de l'absence, dans la zone de sécurité prédéterminée comprenant le trajet prédéfini, d'un élément externe au véhicule cible 12_{A}, et un module d'analyse et de régulation 30 configuré pour déterminer si, à l'instant courant, l'élément externe est dans le champ de vision ou en dehors du champ de vision du module de détection d'obstacle 16 du véhicule cible 12_{A}, et configuré pour générer et transmettre une consigne de conduite à au moins un véhicule sur l'infrastructure lorsque l'élément externe est hors du champ de vision du module de détection d'obstacle du véhicule cible 12_{A}.

Par « zone de sécurité prédéterminée » on entend une zone géographique dont la superficie est strictement supérieure à celle correspondant au trajet prédéfini.

Selon une première variante, la zone de sécurité prédéterminée présente une surface de taille statique s'étendant de part et d'autre de la voie de circulation avec une marge de sensiblement égale à 10m.

Selon une deuxième variante, la zone de sécurité prédéterminée présente une surface de taille dynamique proportionnelle à la vitesse du véhicule cible.

En complément facultatif, le module d'analyse et de régulation 30 comprend un outil de prédiction 32 propre à fournir une prédiction de la trajectoire de l'élément externe 27 et/ou au moins une prédiction d'une position spatiotemporelle de contact entre l'élément externe 27 et le véhicule cible 12_{A} sur le trajet prédéfini.

Selon un aspect particulier de ce complément facultatif, la position spatiotemporelle correspond à une zone elliptique et l'outil de prédiction 32 comprend un instrument de calcul I_{c} des paramètres de la zone elliptique, la surface de la zone elliptique étant proportionnelle à un degré d'incertitude associée à la prédiction fournie par l'outil de prédiction 32.

Par exemple, l'outil de prédiction 32 comprend un filtre de Kalman propre à estimer les états de l'élément externe 27 dynamique. Plus précisément, le filtre de Kalman est apte à faire une prédiction de paramètres correspondant à la position et de la vitesse de l'élément externe 27 détecté et propre à calculer les incertitudes de ces paramètres.

Pour ce faire, une représentation en deux dimensions selon un couple d'axes (X, Y) de la position de l'élément externe 27 est propre à être mise en œuvre par l'outil de prédiction 32 et le filtre de Kalman calcule un degré d'incertitude dans chaque dimension. Un tel degré Incertitude est tout simplement une mesure d'écart possible, ou en variante l'écart maximum possible, de la position estimée. En particulier, si le degré d'incertitude sur X est égal au degré d'incertitude sur Y, la position spatiotemporelle de contact obtenue à partir des deux degrés d'incertitude correspond à une zone circulaire. En revanche, si l'élément externe 27 se déplace selon l'axe X, le degré d'incertitude de la prédiction de sa position selon l'axe X est supérieur à celui selon Y et la position spatiotemporelle de contact obtenue à partir des deux degrés d'incertitude correspond à une zone elliptique.

Selon l'exemple de la figure 1, le module d'analyse et de régulation 30 comprend en outre un outil de génération 34 de la consigne de conduite et un outil de transmission 36 distincts.

Selon un autre aspect particulier, le module d'analyse et de régulation 30 comprend un outil de vérification 38 configuré pour vérifier à au moins un instant postérieur à l'instant courant la validité de la ou des prédiction(s), et configuré pour adapter à l'instant postérieur la consigne de conduite en fonction de ladite validité.

Un tel outil permet un asservissement en temps réel de la génération de consigne en fonction de l'observation d'élément(s) externe(s) reçue.

Dans l'exemple de la figure 1, le véhicule cible 12_{A} comprend une unité de traitement d'informations 40 formée par exemple d'une mémoire 42 et d'un processeur 44 associé à la mémoire 42.

Dans l'exemple de la figure 1, le module de géolocalisation 20, le module de conduite autonome 22 et le module de réception et de traitement 26 sont réalisés chacun sous forme d'un logiciel, ou d'une brique logicielle, exécutable par le processeur 44.

La mémoire 42 du véhicule cible 12_{A} est alors apte à stocker un premier logiciel de géolocalisation pour permettre la géolocalisation du véhicule cible 12_{A}, un deuxième logiciel de conduite autonome adapté pour piloter le véhicule autonome de manière autonome en recevant des informations sur l'environnement du véhicule autonome 12_{A} par l'intermédiaire de capteurs, localisés à l'extérieur ou à l'intérieur du véhicule autonome, et en agissant sur le moteur (non représenté), le système de direction (non représenté) et le système de freinage (non représenté) de manière à modifier la vitesse et la trajectoire du véhicule autonome 12_{A} en réaction aux informations reçues et de manière à se conformer à une mission programmée dans l'automate, un troisième logiciel de réception et de traitement configuré pour recevoir et traiter une consigne de conduite émise par la plateforme de supervision 14 en présence d'un élément externe 27 à la fois dans une zone de sécurité prédéterminée comprenant le trajet prédéfini et en dehors du champ de vision du module de détection d'obstacle du véhicule cible 12_{A}.

Le processeur 44 est alors apte à exécuter chacun des logiciels parmi le premier logiciel de géolocalisation, le deuxième logiciel de conduite autonome, le troisième logiciel de réception et de traitement une consigne de conduite émise par la plateforme de supervision 14.

En variante non représentée, le module de géolocalisation 20, le module de conduite autonome 22, le module de réception et de traitement 26 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific integrated Circuit*).

Lorsqu'une partie du véhicule autonome 12_{A} est réalisée sous forme d'un ou plusieurs logiciels, c'est-à-dire sous forme d'un programme d'ordinateur, cette partie est en outre apte à être enregistrée sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou encore une carte optique. Sur le support lisible est alors mémorisé un programme d'ordinateur comportant des instructions logicielles.

Dans l'exemple de la figure 1, le module de géolocalisation 20, le module de conduite autonome 22, le module de réception et de traitement 26 sont embarqués au sein de l'unique unité de traitement d'informations 40, c'est-à-dire au sein d'un même et unique calculateur électronique du véhicule autonome 12_{A}.

De plus, dans l'exemple de la figure 1, la plateforme de supervision 14 comprend également une unité de traitement d'informations 46 formée par exemple d'une mémoire 48 et d'un processeur 50 associé à la mémoire 48.

Dans l'exemple de la figure 1, le module d'acquisition 28, le module d'analyse et de régulation 30 et ses outils, sont réalisés chacun sous forme d'un logiciel, ou d'une brique logicielle, exécutable par le processeur 50.

La mémoire 48 de la plateforme de supervision 14 est alors apte à stocker, un logiciel d'acquisition propre à acquérir, à un instant courant, au moins une information représentative de la présence ou de l'absence, dans une zone de sécurité prédéterminée comprenant le trajet prédéfini, d'un élément externe 27 au véhicule cible 12_{A}, un logiciel d'analyse et de régulation propre à déterminer si, à un l'instant courant de réception d'une information représentative de la présence ou de l'absence, dans la zone de sécurité prédéterminée comprenant le trajet prédéfini si l'élément externe 27 est dans le champ de vision ou en dehors du champ de vision du module de détection d'obstacle 16 du véhicule cible 12_{A}, et configuré pour générer et transmettre une consigne de conduite à au moins un véhicule sur l'infrastructure lorsque l'élément externe est en dehors du champ de vision du module de détection d'obstacle du véhicule cible.

Le processeur 50 est alors apte à exécuter le logiciel d'acquisition, le logiciel d'analyse et de régulation et les outils logiciels qu'il comprend.

En variante non représentée, le module d'acquisition 28, le module d'analyse et de régulation 30 et ses outils sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific integrated Circuit).*

Lorsqu'une partie de la plateforme de supervision 14 est réalisée sous forme d'un ou plusieurs logiciels, c'est-à-dire sous forme d'un programme d'ordinateur, cette partie est en outre apte à être enregistrée sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou encore une carte optique. Sur le support lisible est alors mémorisé un programme d'ordinateur comportant des instructions logicielles.

Dans l'exemple de la figure 1, le module d'acquisition 28, le module d'analyse et de régulation 30 et ses outils sont intégrés au sein de l'unique unité de traitement d'informations 46, c'est-à-dire au sein d'un même et unique calculateur électronique de la plateforme 14.

Selon la première situation de la figure 1, le capteur débarqué C₁ installé en voirie présente un champ de vision 52 lui permettant de détecter, à un instant courant, un élément externe 27 correspondant à un piéton.

Le capteur débarqué C₁ est alors propre à remonter instantanément, voire quasi instantanément, via un terminal T₁ et une liaison dédiée L_{C} (filaire ou non filaire (e.g radio)), optionnellement sécurisée, une information représentative de la présence du piéton 27 à la plateforme 14.

Le module d'acquisition 28 de la plateforme de supervision 14 est propre à acquérir du capteur débarqué C₁ installé en voirie cette information représentative de la présence du piéton 27.

Selon une variante non représentée, le module d'acquisition 28 de la plateforme de supervision 14 est propre à acquérir cette information représentative de la présence du piéton 27, par une autre voie que celle associée au capteur C₁ débarqué, par exemple par suivi de la géolocalisation du piéton, notamment par le biais du terminal mobile du piéton 27.

Lorsque l'élément externe correspond à un phénomène météorologique imminent tel qu'une averse très localisée, une plaque de verglas ou à un obstacle naturel, l'information représentative de la présence de cet élément externe particulier est générée par tout autre dispositif propre à la générer. Par exemple, une telle information correspond à un SMS (de l'anglais *short message service*) transmis par un piéton et/ou un automobiliste pour avertir la plateforme de supervision d'une chute d'arbre après un orage ou une tempête.

En complément facultatif, le module d'acquisition 28 est également configuré pour acquérir une information de vitesse et/ou d'accélération associée à l'information représentative de la présence de l'élément externe 27.

Le module d'analyse et de régulation 30 de la plateforme de supervision 14 est premièrement propre à traiter cette information en utilisant la zone de sécurité prédéterminée comprenant le trajet prédéfini du véhicule cible 12_{A}.

Par exemple, lorsque le trajet prédéfini du véhicule cible 12_{A} est tel qu'à un instant, postérieur à l'instant courant, il comprend un virage à gauche V_{G} par rapport au vecteur de déplacement K du véhicule cible 12_{A}, le module d'analyse et de régulation 30 est propre à déterminer que l'élément externe correspondant au piéton 27 est absent de la zone de sécurité.

A l'inverse lorsque le trajet prédéfini du véhicule cible 12_{A} est tel qu'à un instant, postérieur à l'instant courant, il comprend un virage à droite V_{D} par rapport au vecteur de déplacement K du véhicule cible 12_{A} le module d'analyse et de régulation 30 est propre à déterminer que l'élément externe correspondant au piéton 27 est présent la zone de sécurité.

De plus, le module d'analyse et de régulation 30 de la plateforme de supervision 14 est propre à prendre en compte la position de géolocalisation du véhicule cible 12_{A} obtenue au moyen du module de géolocalisation 20 du véhicule cible 12_{A} pour déterminer si des éléments de la voirie obstruent ou non le champ de vision 18 du module de détection d'obstacle 16 embarqué à bord du véhicule cible 12_{A}.

En relation avec l'exemple de la figure 1, le module d'analyse et de régulation 30 de la plateforme de supervision 14 est notamment apte à détecter et calculer que le bâtiment B obstrue le champ de vision 18 du module de détection d'obstacle 16 embarqué à bord du véhicule cible 12_{A} et qu'en conséquence l'élément externe correspondant au piéton 27 détecté par le capteur C₁ installé en voirie est en dehors du champ de vision 18 du module de détection d'obstacle 16 du véhicule cible 12_{A}.

Dans cette configuration, le module de détection d'obstacle 16 du véhicule cible 12_{A} ne « voyant » pas l'élément externe correspondant au piéton 27, le module de conduite autonome 22 ne peut anticiper cet élément externe potentiellement perturbateur et adapter automatiquement la trajectoire/vitesse du véhicule cible 12_{A}.

En présence, d'une double condition correspondant à un élément externe 27 à la fois dans la zone de sécurité comprenant le trajet prédéfini du véhicule cible 12_{A} et en dehors du champ de vision 18 du module de détection d'obstacle 16 du véhicule cible 12_{A}, le module d'analyse et de régulation 30 de la plateforme de supervision 14 génère et transmet une consigne de conduite à au moins un véhicule sur l'infrastructure.

Selon une première variante, le véhicule destinataire de la consigne est le véhicule cible 12_{A}.

A titre d'alternative et/ou en complément à la première variante, le véhicule destinataire de la consigne est un autre véhicule que le véhicule cible 12_{A}.

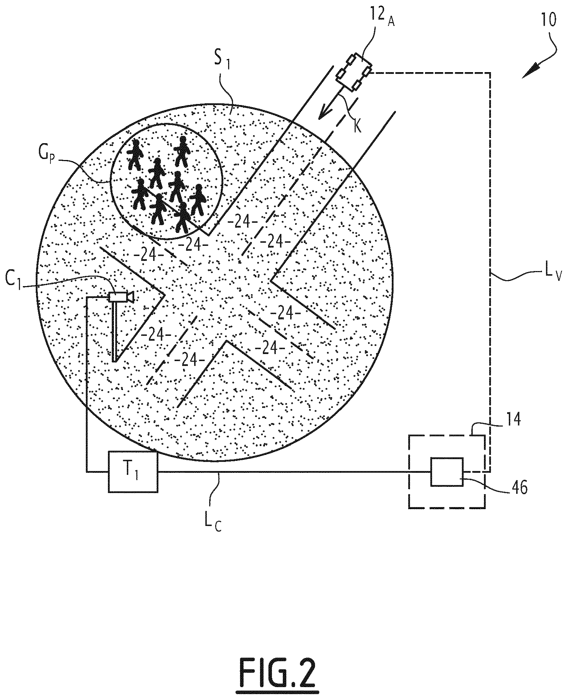

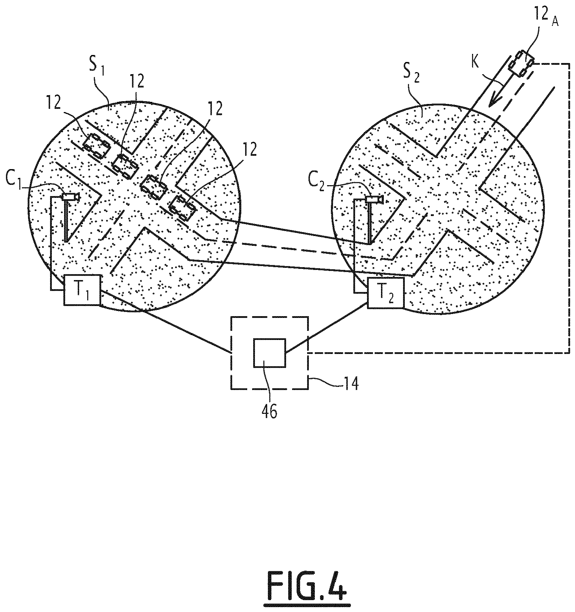

Selon un aspect complémentaire facultatif, l'élément externe est propre à être classé par la plateforme de supervision selon l'invention selon plusieurs catégories comprenant au moins :
- un autre véhicule, distinct du véhicule cible,
- un piéton 27 ou un groupe de piétons G_{P} tel qu'illustré dans l'exemple de situation de la figure 2,
- une congestion de trafic tel qu'illustré sur la figure 4,
- un cycliste ou un groupe de cyclistes,
- une zone de chantier ou de restriction de la circulation,
- un phénomène météorologique,
- un obstacle naturel, tel qu'un arbre, une branche, un animal etc.

Selon la deuxième situation de la figure 2, le capteur débarqué C₁ installé en voirie du site de supervision S₁ est propre à détecter, à un instant courant, un élément externe 27 correspondant à un groupe de piétons G_{P} qui traversent la voie de circulation 24 ou marchent sur le trottoir tels que des piétons sortant d'un lycée, d'un cinéma ou localisé au niveau d'un arrêt de bus.

Le véhicule cible 12_{A} approche le site de supervision S₁, et son module de détection d'obstacle 16 (non représenté sur la figure 2 pour des raisons d'allégement) présente une portée connue de la plateforme de supervision 14 mais inférieure à la distance qui le sépare du groupe de piétons G_{P}, qui en conséquence est en dehors de son champ de vision.

Grâce à la présente invention, la plateforme de supervision 14 est propre à traiter l'information représentative de la présence du groupe de piétons G_{P} transmise par le terminal de traitement T₁ relié directement au capteur débarqué C₁. Plus précisément, le module d'analyse et de régulation 30 de la plateforme de supervision 14 est propre à prendre en compte la position de géolocalisation du véhicule cible 12_{A} obtenue au moyen du module de géolocalisation 20 du véhicule cible 12_{A} pour déterminer que le groupe de piétons Gp est localisé dans la zone de sécurité comprenant le trajet prédéfini du véhicule cible 12_{A}, et que du fait de la distance qui sépare le véhicule cible 12_{A} du groupe de piétons G_{P}, le groupe de piéton est dehors du champs de vision module de détection d'obstacle 16.

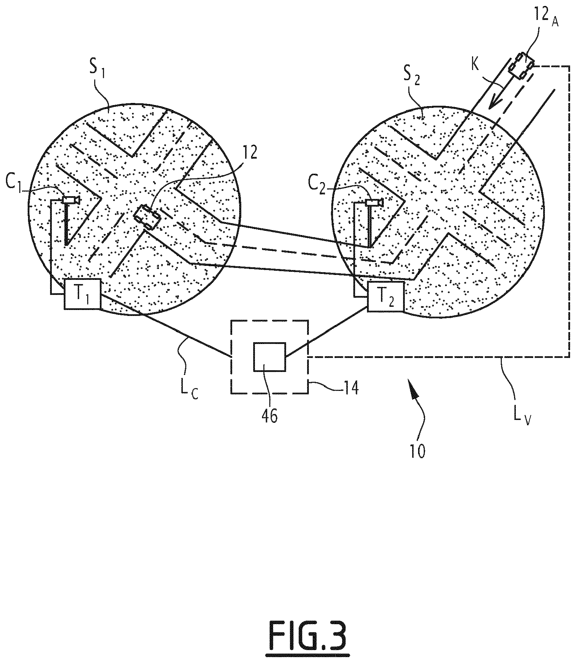

Selon la troisième situation de la figure 3, la plateforme de supervision 14 tire profit du fait qu'elle est capable d'acquérir, de plusieurs sites géographiques distincts successifs S₁, S₂ proches (i.e. ne se chevauchant pas et par exemple distants de 100 à 600m) parcourus par le trajet prédéfini du véhicule cible 12_{A}, une ou des information(s) représentative(s) d'élément(s) externe(s) propre(s) à constituer un ou des obstacle(s) potentiel(s).

Autrement dit, la plateforme de supervision 14 permet notamment un transfert au site S₂ d'une consigne tenant compte d'une information relative au site S₁ dans lequel le capteur débarqué C₁ est notamment propre à remonter, via le terminal T₁ et la liaison dédiée L_{C}, la présence d'un élément externe correspondant au véhicule 12 qui se déplace avec une vitesse élevée tel qu'un véhicule de police, une ambulance, un véhicule particulier.

Plus précisément, le véhicule cible 12_{A} se déplace du site S₂ vers le site S₁ et la plateforme de supervision 14, via l'outil de prédiction 32, est propre à prédire la trajectoire du véhicule 12 du site S₁ et déterminer que ce véhicule 12 semble se diriger, notamment à grande vitesse, vers le site S₂.

Plus précisément, l'outil de prédiction 32 est propre à fournir sur une échelle de temps les positions successives du véhicule 12 et une position spatiotemporelle de contact entre le véhicule 12 et le véhicule cible 12_{A} sur le trajet prédéfini.

Au vu de cette prédiction et du fait que le véhicule 12 localisé sur le site S₁ est hors de portée du module de détection d'obstacle 16 (non représenté sur la figure 3 pour des raisons d'allégement) du véhicule cible 12_{A}, la plateforme de supervision 14 est propre à générer une consigne de décélération à l'attention du véhicule cible 12_{A}.

En complément facultatif, l'outil de vérification 38 du module d'analyse et de régulation 30 de la plateforme de supervision 14 est propre à vérifier en temps réel la réalisation ou non de ces prédictions et en cas d'infirmation à modifier, voire supprimer la consigne de conduite précédemment transmise.

En particulier, pour effectuer une telle vérification l'outil de vérification 38 du module d'analyse et de régulation 30 est propre à utiliser une information fournie par un capteur C₂ distinct du capteur C₁ qui a fourni à l'instant courant l'information représentative de la présence du véhicule 12 sur le trajet prédéfini dans le site S₁.

Selon la quatrième situation de la figure 4, la plateforme de supervision 14 tire profit du fait qu'elle est capable d'acquérir, de plusieurs sites géographiques distincts successifs S₁, S₂ éloignés (i.e. ne se chevauchant pas et par exemple distants de 600m à 2kms) parcourus par le trajet prédéfini du véhicule cible 12_{A}, une ou des information(s) représentative(s) d'élément(s) externe(s) propre(s) à constituer un ou des obstacle(s) potentiel(s).

Selon cette quatrième situation, le véhicule cible 12_{A} se déplace du site S₂ vers le site S₁, et le capteur débarqué C₁ est notamment propre à remonter, via le terminal T₁ et la liaison dédiée L_{C}, la présence d'un élément externe correspondant à une congestion de trafic de quatre véhicules 12 tel qu'un bouchon ou encore un accident de circulation.

La plateforme de supervision 14 selon cet exemple est propre à classer les éléments externes détectés et à adapter la consigne de conduite en fonction de la classe obtenue. Selon la quatrième situation, du fait que l'élément externe est une congestion de trafic propre à bloquer la circulation jusqu'à la position spatiotemporelle de contact prédite entre la congestion de trafic, correspondant aux quatre véhicule 12 à l'arrêt sur le site S₁, et le véhicule cible 12_{A}, la consigne de conduite générée correspond cette fois à un changement de trajectoire et non à une décélération tel qu'appliqué dans les situations précédentes.

Autrement dit selon cet aspect la plateforme de supervision 14 est « intelligente » et propre à associer de manière bijective une classe d'élément externe et un type de consigne.

De même que pour la troisième situation, l'outil de vérification 38 du module d'analyse et de régulation 30 de la plateforme de supervision 14 est propre à vérifier en temps réel la réalisation ou non de ces prédictions (i.e. l'évolution de la congestion de trafic), notamment au moyen d'un capteur C₂ distinct du capteur C₁ qui a fourni à l'instant courant l'information représentative de la présence du véhicule 12 sur le trajet prédéfini dans le site S₁, et en cas d'infirmation à modifier, voire supprimer la consigne de conduite précédemment transmise.

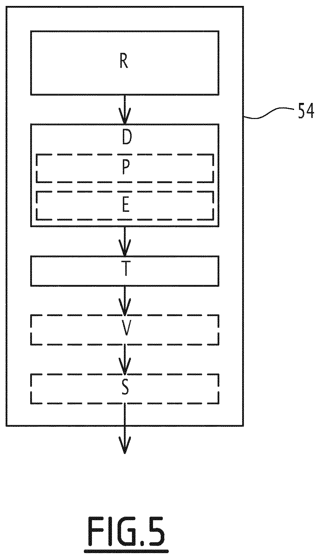

Le fonctionnement de la plateforme de supervision 14 selon l'invention va désormais être expliqué à l'aide de la figure 5 représentant un organigramme du procédé 54, selon l'invention, de supervision d'une infrastructure pour véhicules de transport, notamment autonomes, au moins un véhicule cible comprenant au moins un module de détection d'obstacle de champ de vision prédéterminé et un module de géolocalisation embarqués, ledit véhicule cible étant propre à suivre un trajet prédéfini sur l'infrastructure, le procédé étant mis en œuvre par la plateforme de supervision de l'infrastructure 14.

Lors d'une étape initiale R, la plateforme de supervision 14 acquiert à un instant courant, au moins une information représentative de la présence ou de l'absence, dans une zone de sécurité prédéterminée comprenant le trajet prédéfini, d'un élément externe 27, G_{P} au véhicule cible 12_{A}.

Optionnellement, la plateforme de supervision 14 acquiert simultanément une information de vitesse, voire une information d'accélération, associée à l'information représentative de la présence ou de l'absence, dans une zone de sécurité prédéterminée comprenant le trajet prédéfini, d'un élément externe 27, Gp au véhicule cible 12_{A}.

La plateforme de supervision 14 détermine ensuite lors d'une étape D d'analyse et de régulation, si, à l'instant courant, l'élément externe 27, Gp est dans le champ de vision ou en dehors du champ de vision du module de détection d'obstacle 16 du véhicule cible 12_{A}, et configuré pour générer et transmettre une consigne de conduite à au moins un véhicule sur l'infrastructure lorsque l'élément externe 27, Gp est en dehors du champ de vision du module de détection d'obstacle 16 du véhicule cible 12_{A}.

Selon des aspects complémentaires facultatifs représentés en pointillés, l'étape D d'analyse et de régulation comprend deux étapes intermédiaires :
- une étape P, dans laquelle l'outil de prédiction 32 du module d'analyse et de régulation 30 fournit au moins une prédiction de la trajectoire de l'élément externe 27, Gp et/ou au moins une prédiction d'une position spatiotemporelle de contact entre l'élément externe et le véhicule cible 12_{A} sur le trajet prédéfini.
- une étape E, dans laquelle, lorsque la position spatiotemporelle correspond à une zone elliptique, l'instrument de calcul I_{C} de l'outil de prédiction 32 calcule paramètres de la zone elliptique, la surface de la zone elliptique étant proportionnelle à un degré d'incertitude associée à la prédiction P fournie par l'outil de prédiction.

Plus précisément, l'étape de prédiction P comprend la prédiction du trajet de l'élément externe à partir de sa position et de son vecteur vitesse (voire son vecteur accélération si obtenue lors de l'étape d'acquisition R), la détermination du point d'intersection (s'il existe) du trajet de l'élément externe avec le trajet prédéfini du véhicule cible et la détermination de la période TTC de temps qui sépare l'instant courant de l'instant d'arrivée de l'élément externe à ce point, la détermination de la position future du véhicule cible sur son trajet prédéfini une fois que la période TTC est écoulée et ce à partir de ses paramètres dynamiques (vitesse, accélération, etc.), le risque d'une collision étant proportionnel à la distance entre cette position future et le point d'intersection).

A la suite de l'étape D d'analyse et de régulation, lors d'une étape T l'outil de génération 34 génère et l'outil de transmission 36 transmet une consigne de conduite à au moins un véhicule sur l'infrastructure lorsque l'élément externe 27, Gp est en dehors du champ de vision du module de détection d'obstacle 16 du véhicule cible (12_{A}), une telle consigne étant comme décrit précédemment adaptée à la situation en cours de supervision.

Lors d'une étape ultérieure V facultative, la plateforme de supervision 14 vérifie au moyen de son outil de vérification 38 la validité ou non de la ou des prédictions obtenues lors de l'étape P.

En fonction du résultat de l'étape de vérification V, au cours d'une étape S également facultative, la plateforme de supervision 14 génère une consigne de modification, voire une consigne de suppression de la consigne de conduite précédemment générée.

Ainsi, la plateforme de supervision 14 selon l'invention, tout en filtrant les informations acquises au moyen de l'ensemble de capteur(s) embarqués/débarqués et des dispositifs de surveillance auxquels elle est relié est apte à assister le véhicule cible qu'elle supervise pour lui permettre, ou permettre à d'autres véhicules présents sur l'infrastructure, de mieux anticiper tout élément susceptible de constituer un obstacle potentiel et non visible du module de détection d'obstacle 16 embarqué à bord du véhicule cible 12_{A}.

On conçoit ainsi que la plateforme de supervision 14 selon l'invention permet d'offrir une surveillance plus efficace et une amélioration de la sécurité des véhicules se déplaçant sur l'infrastructure qu'elle supervise en palliant les obstructions du champ de vision ou le manque de portée des modules de détection d'obstacle embarqués à bord de véhicules.

## Revendications

1. Plateforme de supervision (14) d'une infrastructure pour véhicules (12, 12_{A}) de transport, notamment autonomes, au moins un véhicule cible (12_{A}) comprenant au moins un module de détection d'obstacle (16) de champ de vision prédéterminé et un module de géolocalisation (20) embarqués, ledit véhicule cible (12_{A}) étant propre à suivre un trajet prédéfini sur l'infrastructure, **caractérisé en ce que** la plateforme (14) comprend :
- un module d'acquisition (28) configuré pour acquérir, à un instant courant, au moins une information représentative de la présence ou de l'absence, dans une zone de sécurité prédéterminée comprenant le trajet prédéfini, d'un élément externe (27, G_{P}) au véhicule cible (12_{A}), et
- un module d'analyse et de régulation (30) configuré pour déterminer si, à l'instant courant, l'élément externe (27, G_{P}) est dans le champ de vision ou en dehors du champ de vision du module de détection d'obstacle (16) du véhicule cible (12_{A}), et configuré pour générer et transmettre une consigne de conduite à au moins un véhicule sur l'infrastructure lorsque l'élément externe (27, G_{P}) est en dehors du champ de vision du module de détection d'obstacle (16) du véhicule cible (12_{A}).

2. Plateforme (14) selon la revendication 1, dans lequel, lorsque l'élément externe (27, G_{P}) au véhicule cible est mobile, le module de d'acquisition (28) est également configuré pour recevoir une information de vitesse et/ou d'accélération associée à l'information représentative de la présence de l'élément externe.

3. Plateforme (14) selon la revendication 2, dans lequel le module d'analyse et de régulation (30) comprend un outil de prédiction (32) propre à fournir une prédiction de la trajectoire de l'élément externe (27, G_{P}) et/ou au moins une prédiction d'une position spatiotemporelle de contact entre l'élément externe et le véhicule cible (12_{A}) sur le trajet prédéfini.

4. Plateforme (14) selon la revendication 3 dans lequel la position spatiotemporelle correspond à une zone elliptique et dans lequel l'outil de prédiction (32) comprend un instrument de calcul (I_{C}) des paramètres de la zone elliptique, la surface de la zone elliptique étant proportionnelle à un degré d'incertitude associée à la prédiction fournie par l'outil de prédiction (32).

5. Plateforme (14) selon l'une quelconque des revendications 3 ou 4 selon laquelle le module d'analyse et de régulation (30) comprend un outil de vérification (38) configuré pour vérifier à au moins un instant postérieur à l'instant courant la validité de la ou des prédiction(s), et configuré pour adapter à l'instant postérieur la consigne de conduite en fonction de ladite validité.

6. Plateforme (14) selon l'une quelconque des revendications précédentes dans lequel la plateforme est propre à classer l'élément externe selon plusieurs catégories comprenant au moins :
- un autre véhicule, distinct du véhicule cible,
- une congestion de trafic,
- un piéton (27) ou un groupe de piétons (G_{P}),
- un cycliste ou un groupe de cyclistes,
- une zone de chantier ou de restriction de la circulation,
- un phénomène météorologique
- un obstacle naturel
et à adapter le type de consigne en fonction de la catégorie d'élément externe.

7. Véhicule (12, 12_{A}), notamment autonome (12_{A}), propre à se déplacer sur une infrastructure pour véhicules de transport supervisée par une plateforme de supervision selon l'une quelconque des revendications précédentes, au moins un véhicule cible (12_{A}) comprenant au moins un module de détection d'obstacle (16) de champ de vision prédéterminé et un module de géolocalisation embarqués, ledit véhicule cible étant propre à suivre un trajet prédéfini sur l'infrastructure,
**caractérisé en ce que** ledit véhicule comprend un module de réception et de traitement (26) configuré pour recevoir et traiter une consigne de conduite émise par la plateforme de supervision (14) en présence d'un élément externe (27, G_{P}) à la fois dans une zone de sécurité prédéterminée comprenant le trajet prédéfini et en dehors du champ de vision du module de détection d'obstacle du véhicule cible (12_{A}).

8. Système de transport comprenant une flotte de véhicules (12, 12_{A}), notamment autonomes (12_{A}), propres à se déplacer sur une infrastructure pour véhicules de transport, la flotte de véhicules comprenant au moins un véhicule cible (12_{A}) comprenant au moins un module de détection d'obstacle (16) de champ de vision prédéterminé et un module de géolocalisation embarqués, ledit véhicule cible (12_{A}) étant propre à suivre un trajet prédéfini sur l'infrastructure,
**caractérisé en ce qu'**il comprend en outre une plateforme de supervision (14) selon l'une quelconque des revendications 1 à 6 et **en ce qu'**au moins un véhicule (12, 12_{A}) de la flotte de véhicules comprend un module de réception et de traitement (26) configuré pour recevoir et traiter une consigne de conduite émise par la plateforme de supervision (14) en présence d'un élément externe à la fois dans une zone de sécurité prédéterminée comprenant le trajet prédéfini et en dehors du champ de vision du module de détection d'obstacle (16) du véhicule cible (12_{A}).

9. Procédé (54) de supervision d'une infrastructure pour véhicules de transport, notamment autonomes, au moins un véhicule cible comprenant au moins un module de détection d'obstacle de champ de vision prédéterminé et un module de géolocalisation embarqués, ledit véhicule cible étant propre à suivre un trajet prédéfini sur l'infrastructure, le procédé étant mis en œuvre par une plateforme de supervision de l'infrastructure, le procédé comprenant les étapes consistant à :
- acquérir (R), à un instant courant, au moins une information représentative de la présence ou de l'absence, dans une zone de sécurité prédéterminée comprenant le trajet prédéfini, d'un élément externe au véhicule cible,
- déterminer (D) si, à l'instant courant, l'élément externe est dans le champ de vision ou en dehors du champ de vision du module de détection d'obstacle du véhicule cible, puis générer et transmettre une consigne de conduite à au moins un véhicule sur l'infrastructure lorsque l'élément externe est en dehors du champ de vision du module de détection d'obstacle du véhicule cible.

10. Programme d'ordinateur comportant des instructions logicielles qui, lorsqu'elles sont exécutées par un ordinateur, mettent en œuvre un procédé de supervision selon la revendication précédente.
